# EUROPEAN PATENT SPECIFICATION

(11) **EP 4 347 351 B1**
(45) Date of publication and mention of the grant of the patent: **31.12.2025**
(21) Application number: 22729817.1
(22) Date of filing: 26.05.2022
(51) Int. Cl.: B62B 5/00, B65D 6/18

(54) **KIT FOR THE TRANSPORTATION OF MOVEABLE GOODS AND FOODSTUFFS WHICH CAN BE REVERSIBLY ENGAGED IN THE TRUNK OF ANY ROAD VEHICLE**
BAUSATZ ZUM TRANSPORT VON BEWEGLICHEN GÜTERN UND LEBENSMITTELN, DIE REVERSIBEL IM KOFFERRAUM EINES BELIEBIGEN STRASSENFAHRZEUGS VERRASTBAR SIND
KIT POUR LE TRANSPORT DE MARCHANDISES ET DE PRODUITS ALIMENTAIRES MOBILES POUVANT ÊTRE ENGAGÉS DE MANIÈRE RÉVERSIBLE DANS LE COFFRE D'UN QUELCONQUE VÉHICULE ROUTIER

(30) Priority: 28.05.2021 IT 202100014000
(43) Date of publication of application: 10.04.2024
(73) Proprietor: S.p.i.ga. S.r.l., 83100 Avellino (AV) (IT)
(72) Inventor: GAETA, Carmine, 83100 Avellino (AV) (IT)
(74) Representative: Fiammenghi, Eva
(86) International application number: PCT/IB2022/054974
(87) International publication number: WO 2022/249130

(56) References cited:
- FR-A1- 3 066 747
- GB-A- 2 561 527
- US-A- 4 720 020
- US-A1- 2015 114 959

## Description

### Technical field

The present invention relates to the field of transportation and storage of articles. In greater detail, this patent application relates to a kit integrated inside the car trunk, which can be opened and closed, provided with wheels and compartments, adapted to transport moveable goods and foodstuffs, which enables both smart and easy spending.

### Prior art

The entry into the age of shopping by artificial intelligence, electronic eyes and machine learning requires dealers to invest in terms of logistics and costs. Measures have long been taken to adapt the means aimed at making the shopping experience easier if users are willing to continue to go to shop personally.

As a matter of fact, a variety of foldable and transportable trolleys are known in the current state of the art. Furthermore, a variety of smart trolley models have been introduced to the market in recent years.

New trolleys are often provided with a scanner, a payment device and a small touch screen to enable easy movement around the store.

For example, patent MX2018006807 describes a system in which a self-checkout trolley is provided, included in the body of the trolley. The body of the trolley is provided with:
- an inner region, an access element;
- a first sensor arranged outside the inner region of the body of the trolley, configured to obtain information on an item to be positioned inside the trolley;
- a second sensor arranged inside the body of the trolley, configured to verify the information on the item obtained from the first sensor.

Furthermore, an associated method is provided for: a highly technological system, which introduced a completely revolutionary way of shopping.

However, this system is disadvantageously without a mechanism which allows the assembly and disassembly of the device and which makes the shopping experience easy and sustainable.

Patent number WO2010100583, on the other hand, is a trolley which includes a plurality of removable baskets provided with respective rims. A foldable frame provided with a folded configuration and an open configuration; it comprises a plurality of multiple wheels and an upper support structure which is capable, when the frame is in the open configuration, of supporting the baskets alongside the respective rims. However, the device in question lacks cutting-edge technology for smart shopping. It also lacks the possibility to transport foodstuffs and at the same time preserve them safely.

Other examples of devices or systems for shopping are described in documents FR3066747A1, US2015/114959A1, US4720020A and GB2561527A.

In the current state of the art, there do not seem to be devices that solve the above-described problems. The system described in detail below will allow to combine the functions of the device that can be easily transported and disassembled with technological functions such as a programmed electronic system capable of power supplying cold or heatable containers as well as to allow the interaction with the users for a smart shopping.

There seems to be a complete lack of a system that allows to avoid the inconvenience of using the shopping trolley provided by the supermarket. In order to borrow one, in the time necessary for shopping, one has to use a coin and it cannot be taken for granted that one has a coin. It would be far more practical if everyone had their own shopping trolley, without having to use those provided by the supermarket.

### Description of the invention

According to the present invention, herein provided is a kit for the transportation of moveable goods and foodstuffs which effectively solves the above-mentioned problems. According to the invention, the device comprises a foldable modular basket which can be reversibly engaged in the trunk of any road vehicle, thanks to a base panel provided with tracks on the upper surface. Said panel is adapted to be arranged inside the trunk of a car in order to stably fix the basket in the trunk of the car. The rails arranged on the base panel ensure that the foldable modular basket that forms the shopping trolley can slide from the inside toward the outside of the trunk and vice versa.

Said foldable modular basket is provided with wheels and several compartments, for the transportation of moveable goods and foodstuffs, inserted in the basket. It is characterised in that it comprises two tilting hatches, one right and one left, installed laterally to form two of the four walls. They can be opened and closed using hinges, positioned on the upper part, that work as pins upon receiving the upward thrust of the hatches. Once opened and fixed in a vertical position, the two hatches support the entire structure of the basket together with two foldable hatches, which form the two additional walls of the basket. Said hatches are advantageously designed to be raised and lowered thanks to a horizontal strip of hinges, positioned at half the height of the side hatches, allowing easy closing and opening thereof.

A third element is a lower panel, arranged below said tilting hatches and said foldable hatches, which acts as the bottom of the foldable modular basket; the innovative aspect of this element actually lies in the fact that it is provided with smart connectors which supply electrical energy to a plurality of devices adapted to be connected to said connectors, such as for example several modular compartments, supplied along with the device, which will be described shortly hereinafter.

At the lower part, the panel described above is provided with magnets, designed to connect further panels by means of magnetic clips so as to be able to form a shopping trolley "with a basket".

Below the lower panel, a module is applied that is provided with wheels, which can be closed horizontally, provided with magnetic clips adapted to be applied to the magnets arranged below the lower panel. The joining of the two modules allows the user to easily move the entire device.

The rechargeable battery module is installed laterally to the right tilting hatch and it allows to power supply the entire device and, as mentioned, the connectors. The battery charge can be advantageously supplied by the battery of the car in which the present kit is installed.

Inside the basket a plurality of modular compartments are inserted which act as base containers, insulating fridge containers and heatable containers. They may advantageously be provided with a heat stabiliser so as to keep the foodstuffs at the desired temperature.

On the tilting hatches, there are arranged:
- at least a pair of handles positioned on said right and left tilting hatches adapted to raise or lower the entire foldable modular basket;
- a handle provided with a gripping element and which can be connected by means of clips on the upper surface of one of said tilting hatches; the aforementioned handle allows any user to move the device easily once it has been coupled to the module provided with wheels.

A removable thermoregulator lid capable of monitoring and protecting the content of the basket from temperature changes is arranged to close the basket.

The dimensions of said foldable modular basket can vary from a minimum of 54 cm x 37 cm x 28 cm to a maximum of 200 cm x 185 cm x 178 cm; furthermore, in a further version, all its parts can be disassembled and assembled by means of an insertion mechanism provided with rails. Also the dimensions of said modular compartments may vary and they can be adapted to the size of said foldable modular basket; as a matter of fact, they can be remodulated by the user whenever the device is used.

Lastly, said device can be provided with power supply through the installation of solar panels located above the thermoregulator lid, this option would allow an advantageous energy saving. The advantages offered by the present invention are apparent in the light of the description set forth herein and will be further clarified by the accompanying figures and the detailed description thereof.

### Description of the figures

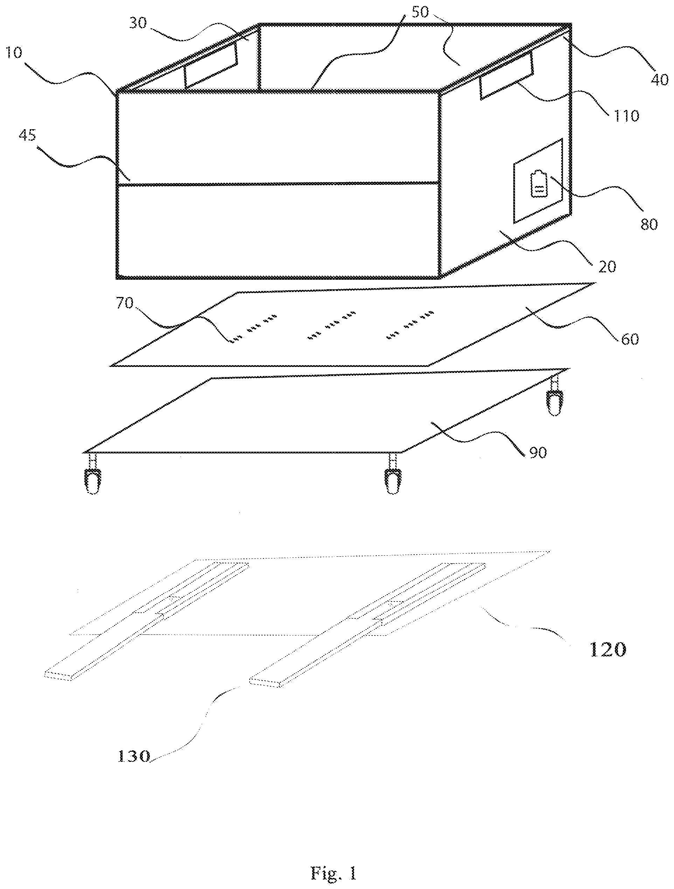

The invention will be described below in a preferred embodiment by way of non-limiting example and with the aid of the Fig. 1 which shows some of the components of the device in a preferred assembly. The basket 10, in the open configuration, comprises a right tilting hatch 20 and a left tilting hatch 30, each of which is provided with handles 110 and which, together with the foldable hatches 50, that form the vertical walls of the device. The open configuration can be changed to closed by means of a system of hinges 40 which allow the walls to slide in a horizontal position. On the bottom of the basket 10, the lower panel 60 is arranged, adapted to be fixed to the base panel 120 provided with tracks 130. Said lower panel 60 is provided with connectors 70 and, once the basket has been removed, it can be connected, by means of magnets, to a wheel module 90.

### Detailed description of the invention

The present invention will now be illustrated purely by way of non-limiting or binding example, with the aid of Fig. 1.

With reference to the aforementioned figure, all the technological components of the kit for the transportation of moveable goods and foodstuffs and the interaction thereof are shown. The kit is characterised in that it comprises a reversibly foldable modular basket 10 thanks to a base panel 120 provided with rails 130 on the upper surface. It is designed to be fixed inside the trunk of a car, also reversibly and, in turn, to stably fix said foldable modular basket 10 inside the trunk. The aforementioned rails 130 allow the sliding of said foldable modular basket (10) from the inside of the trunk toward the outside and vice versa.

The aforementioned foldable modular basket 10 is provided with a right tilting hatch 20 and a left tilting hatch 30, installed laterally to said basket 10 and adapted to be opened and closed by means of hinges 40; once opened and fixed in a vertical position, they support the entire structure of the basket 10. Two foldable hatches 50 adapted to be raised and lowered by means of a horizontal strip of hinges 45 which cut said foldable hatches 50 into half allowing the opening and closing thereof. A lower panel 60, arranged below said tilting hatches 20, 30 and of said foldable hatches 50 which acts as the bottom of the foldable modular basket 10 and it is designed to be fixed to said base panel 120 so as to guarantee the stability of the entire kit and of the contents of the foldable modular basket 10. The aforementioned lower panel 60 is provided with:
- smart connectors 70 adapted to supply electric power, received by means of a battery module 80, to a plurality of devices programmed to be connected to said connectors 70;
- magnets arranged on the lower surface of said panel 60, adapted to anchor possible further panels by means of magnetic clips.

A module provided with wheels 90, which can be closed horizontally, which allows the transportation of the entire foldable modular basket 10; it is provided with magnetic clips designed to be applied to the magnets arranged below the lower panel 60 and to allow the joining of the two modules.

Another base element is a rechargeable battery module 80 and it is installed laterally to said right tilting hatch 20 and allow the power-supply of the entire device.

Inside the foldable modular basket 10, a plurality of modular compartments are inserted that are adapted to act as base containers, insulating fridge containers and heatable containers. As a matter of fact, they may advantageously serve as a container, mini-fridge or they may be provided with a heat stabiliser so as to keep the foodstuffs at the pre-established temperature. Laterally to the basket 10, at least two handles 110 are arranged, positioned on the upper part of said right and left tilting hatches 20, 30, adapted to raise and lower the entire foldable modular basket 10.

Furthermore, on the upper surface of said left tilting hatch 30 there can be advantageously applied a handle which can be removed by means of a clip provided with a gripping element and connectable; it allows any user to move the device easily once it has been coupled to the module provided with wheels 90.

A removable thermo-regulatable lid capable of monitoring and protecting the content of the basket 10 from temperature changes 10 is arranged to close the basket.

The dimensions of said foldable modular basket 10 can vary from a minimum of 54 cm x 37 cm x 28 cm for a 45-litre capacity to a maximum of 200 cm x 185 cm x 178 cm for a 3560-litre capacity; furthermore, in a further version, all its parts can be disassembled and assembled by means of an insertion mechanism provided with rails. Also the dimensions of said modular compartments may vary and they can be adapted to the size of said foldable modular basket 10; as a matter of fact, they can be remodulated by the user whenever the device is used.

In an alternative version, said foldable modular basket 10 is provided with holes adapted to house a strap for the crossbody transportation of said basket 10, if preferred to transportation by means of said module provided with wheels 90.

The aforementioned battery module 80 can be recharged by means of a common usb socket, usbc socket or any other device adapted to act as a charger.

The device can be provided with a programmable electronic system, applied below said battery module 80, adapted to be connected with at least an automated remote control adapted to allow the closing and opening of said rail mechanism and any other state of the art device.

In a developed version, said device is provided with a built-in scanner adapted to interactively manage the shopping of the user (for example by eliminating ticks from a shopping list); as a matter of fact, it can be connected through wireless network to an application that can be installed on state-of-the-art mobile devices.

Lastly, said device can be provided with power supply through the installation of solar panels located above the thermoregulator lid, this option would allow an advantageous energy saving. Lastly, it is clear that modifications, additions or variations which are obvious to a person skilled in the art may be applied to the invention described heretofore without departing from the scope of protection provided by the attached claims.

## Claims

1. Kit for the transportation of moveable goods and foodstuffs which can be reversibly engaged in the trunk of any road vehicle, said kit comprising a modular foldable basket (10) and a base plate (120), said modular foldable basket (10) being arranged to be fixed above the base panel (12)), said base panel (120) being provided with tracks (130) on the upper surface and adapted to be in turn reversibly fixed in a trunk of a vehicle to guarantee the stability of said basket (10) and the entire kit; said rails (130) being adapted to slide said modular foldable basket (10) from the inside to the outside of the trunk and vice versa; said modular foldable basket (10) being **characterised in that** it comprises:
- a right tilting hatch (20) and a left tilting hatch (30), installed laterally to said basket (10), adapted to be opened and closed by rotating on the axis of a horizontal hinge strip (40), located on the upper part of said hatches (20, 30); once opened and fixed in vertical position, said tilting hatches (20, 30) being adapted to support the entire basket (10);
- at least two foldable hatches (50) adapted to be raised and lowered by means of a horizontal hinge strip (45); said hinges (45) being adapted to divide said foldable hatches (50) by half allowing the closing and opening thereof;
- a lower panel (60), arranged beneath said tilting hatches (20, 30) and said foldable hatches (50), serving as a bottom of said modular foldable basket (10) is adapted to stably fix said modular foldable basket (10) on said base panel (120) provided with tracks (130); said lower panel (60) being provided with smart connectors (70) adapted to send electrical power to a plurality of devices adapted to be connected to said connectors (70); said lower panel being provided with magnets, arranged on the lower surface of said lower panel (60), adapted to attract magnetic clips for fixing further modules;
- a plurality of said connectors (70) adapted to receive electrical power by means of at least a battery module (80) and retransmit it to a plurality of devices adapted to be connected to said connectors (70);
- at least a module provided with horizontally closable wheels (90) adapted to be applied and fixed beneath said lower panel (60) by means of magnetic clips adapted to be attracted to said magnets; said modules provided with wheels (90) being adapted to allow the transportation of the entire modular foldable basket (10);
- said chargeable battery module (80), installed laterally to said right tilting hatch (20), adapted to power-supply the entire device;
- a plurality of modular compartments adapted to serve as base containers, insulating fridge containers and heatable containers and adapted to be inserted into said modular foldable basket (10) to allow the division of the products contained therein;
- at least two handles (110), positioned on said tilting hatches (20, 30) right and left, adapted to raise or lower the entire modular foldable basket (10);
- a handle of the basket, provided with a gripping element, adapted to move the entire device by means of the module provided with wheels (90), which can be connected by means of clips on the upper surface of one of said tilting hatches (20, 30);
- a removable thermoregulator lid, arranged to cover said basket (10).

2. Kit for the transportation of moveable goods and foodstuffs which can be reversibly engaged in the trunk of any road vehicle comprising a foldable modular basket (10), according to the preceding claim 1, **characterised in that** the dimensions of said modular foldable basket (10) may range from a minimum of 54 cm x 37 cm x 28 cm for a capacity of 45 litres to a maximum of 200 cm x 185 cm x 178 cm for a capacity of 3560 litres; the dimensions of said modular compartments can be adapted to the size of said modular foldable basket (10); furthermore, they can be remodulated by the user whenever the kit is used.

3. Kit for the transportation of moveable goods and foodstuffs which can be reversibly engaged in the trunk of any road vehicle comprising a foldable modular basket (10), according to any one of the preceding claims 1 or 2, **characterised in that** said modular foldable basket (10) is adapted to have all the parts thereof disassembled and assembled by means of an insertion mechanism provided with tracks.

4. Kit for the transportation of moveable goods and foodstuffs which can be reversibly engaged in the trunk of any road vehicle comprising a foldable modular basket (10), according to any one of the preceding claims, **characterised in that** said modular foldable basket (10) is provided with holes adapted to house a strap for the transportation of said basket (10) in a crossbody fashion.

5. Kit for the transportation of moveable goods and foodstuffs which can be reversibly engaged in the trunk of any road vehicle comprising a foldable modular basket (10), according to any one of the preceding claims **characterised in that** said battery module (80) can be charged by means of a common usb, usbc or any other device adapted to serve as a charger.

6. Kit for the transportation of moveable goods and foodstuffs which can be reversibly engaged in the trunk of any road vehicle comprising a foldable modular basket (10), according to any one of the preceding claims, **characterised in that** said kit is provided with a programmable electronic system, incorporated in said battery module (80), adapted to be connected with at least a remote control and with any other state of the art device.

7. Kit for the transportation of moveable goods and foodstuffs which can be reversibly engaged in the trunk of any road vehicle comprising a foldable modular basket (10), according to claim 6 when dependent on claim 3, **characterised in that** said kit is provided with an automated remote control adapted to allow the closure and the opening of said insertion mechanism provided with tracks by means of said programmable electronic system.

8. Kit for the transportation of moveable goods and foodstuffs which can be reversibly engaged in the trunk of any road vehicle comprising a foldable modular basket (10), according to any one of the preceding claims, **characterised in that** said kit is provided with an incorporated scanner adapted to be connected with applications which can be installed on state-of-the-art mobile devices and interactively manage the user's shopping.

9. Kit for the transportation of moveable goods and foodstuffs which can be reversibly engaged in the trunk of any road vehicle comprising a foldable modular basket (10), according to any one of the preceding claims, **characterised in that** said kit is provided with means for supplying photovoltaic energy by means of solar panels installed above said thermoregulator lid.

## Patentansprüche

1. Bausatz zum Transport von beweglichen Gütern und Lebensmitteln, der reversibel im Kofferraum eines beliebigen Straßenfahrzeugs verrastbar ist, wobei der Bausatz einen modularen faltbaren Korb (10) und eine Grundplatte (120) aufweist, wobei der modulare, faltbare Korb (10) so angeordnet ist, dass er über der Grundplatte (12)) befestigt werden kann, wobei die Grundplatte (120) an der Oberseite mit Schienen (130) versehen und dazu angepasst ist, ihrerseits reversibel in einem Kofferraum eines Fahrzeugs befestigt zu werden, um die Stabilität des Korbs (10) und des gesamten Bausatzes zu gewährleisten; wobei die Schienen (130) dazu angepasst sind, den modularen faltbaren Korb (10) vom Inneren des Kofferraums nach außen und umgekehrt zu verschieben; wobei der modulare faltbare Korb (10) **dadurch gekennzeichnet ist, dass** er aufweist:
- eine rechte Kippklappe (20) und eine linke Kippklappe (30), die seitlich an dem Korb (10) angebracht und dazu angepasst sind, durch Drehen um die Achse eines horizontalen Scharnierstreifens (40), der sich am oberen Teil der Klappen (20, 30) befindet, geöffnet und geschlossen werden zu können; wobei die Kippklappen (20, 30) dazu angepasst sind, den gesamten Korb (10) zu tragen, wenn sie geöffnet und in vertikaler Position fixiert sind;
- zumindest zwei faltbare Klappen (50), die dazu angepasst sind, mittels eines horizontalen Scharnierstreifens (45) angehoben und abgesenkt zu werden; wobei die Scharniere (45) dazu angepasst sind, die faltbaren Klappen (50) in zwei Hälften zu teilen, so dass diese geschlossen und geöffnet werden können;
- eine unterhalb der Kippklappen (20, 30) und der klappbaren Klappen (50) angeordnete untere Platte (60), die als Boden des modularen klappbaren Korbs (10) dient und dazu angepasst ist, den modularen klappbaren Korb (10) stabil auf der mit Schienen (130) versehenen Grundplatte (120) zu befestigen; wobei die untere Platte (60) mit intelligenten Verbindern (70) versehen ist, die dazu angepasst sind, elektrische Leistung an mehrere Einrichtungen zu senden, die dazu angepasst sind, mit den Verbindern (70) verbunden zu werden; wobei die untere Platte mit Magneten versehen ist, die an der Unterseite der unteren Platte (60) angeordnet sind und dazu angepasst sind, Magnetklammern zum Befestigen weiterer Module anzuziehen;
- mehrere der Verbinder (70), die dazu angepasst sind, elektrische Leistung mittels zumindest eines Batteriemoduls (80) zu empfangen und an mehrere Einrichtungen, die dazu angepasst sind, mit den Verbindern (70) verbunden zu werden, weiterzuleiten;
- zumindest ein Modul, das mit horizontal verschließbaren Rädern (90) versehen ist, die dazu angepasst sind, mittels Magnetklammern, die dazu angepasst sind, von den Magneten angezogen zu werden, unter der unteren Platte (60) angebracht und befestigt zu werden; wobei die mit Rädern (90) versehenen Module dazu angepasst sind, den Transport des gesamten modularen faltbaren Korbs (10) zu ermöglichen;
- das wiederaufladbare Batteriemodul (80), das seitlich an der rechten Kippklappe (20) angebracht ist, dazu angepasst ist, die gesamte Einrichtung mit Strom zu versorgen;
- mehrere modulare Fächer, die dazu angepasst sind, als Grundbehälter, isolierte Kühlbehälter und beheizbare Behälter zu dienen und dazu angepasst sind, in den modularen faltbaren Korb (10) eingesetzt zu werden, um die Aufteilung der darin enthaltenen Produkte zu ermöglichen;
- zumindest zwei Griffe (110), die rechts und links an den Kippklappen (20, 30) angeordnet und dazu angepasst sind, den gesamten modularen faltbaren Korb anzuheben oder abzusenken;
- einen Griff des Korbs, der mit einem Greifelement versehen ist, das dazu angepasst ist, die gesamte Einrichtung mittels des mit Rädern (90) versehenen Moduls zu bewegen, das mittels Klammern an der Oberseite einer der Kippklappen (20, 30) befestigt werden kann;
- einen abnehmbaren Thermoregler-Deckel, der so angeordnet ist, dass er den Korb (10) abdeckt.

2. Bausatz zum Transport von beweglichen Gütern und Lebensmitteln, der reversibel im Kofferraum eines beliebigen Straßenfahrzeugs verrastbar ist und einen faltbaren modularen Korb (10) aufweist, gemäß dem vorangehenden Anspruch 1, **dadurch gekennzeichnet, dass** die Abmessungen des modularen faltbaren Korbs (10) von zumindest 54 cm x 37 cm x 28 cm für ein Fassungsvermögen von 45 Litern bis maximal 200 cm x 185 cm x 178 cm für ein Fassungsvermögen von 3560 Litern reichen können; die Abmessungen der modularen Fächer können an die Größe des modularen faltbaren Korbs (10) angepasst werden; außerdem können sie durch den Benutzer immer dann, wenn der Bausatz verwendet wird, neu angepasst werden.

3. Bausatz zum Transport von beweglichen Gütern und Lebensmitteln, der reversibel im Kofferraum eines beliebigen Straßenfahrzeugs verrastbar ist, der eine faltbaren modularen Korb (10) aufweist, gemäß einem der vorangehenden Ansprüche 1 oder 2, **dadurch gekennzeichnet, dass** der modulare faltbare Korb (10) so angepasst ist, dass alle seine Teile mittels eines mit Schienen versehenen Einsteckmechanismus zerlegt und zusammengebaut werden können.

4. Bausatz zum Transport von beweglichen Gütern und Lebensmitteln, der reversibel im Kofferraum eines beliebigen Straßenfahrzeugs verrastbar ist, der einen faltbaren modularen Korb (10) aufweist, gemäß einem der vorangehenden Ansprüche, **dadurch gekennzeichnet, dass** der modulare faltbare Korb (10) mit Löchern versehen ist, die dazu angepasst sind, einen Gurt für dem Transport des Korbs (10) in einer körperkreuzenden Weise aufzunehmen.

5. Bausatz zum Transport von beweglichen Gütern und Lebensmitteln, der reversibel im Kofferraum eines beliebigen Straßenfahrzeugs verrastbar ist, der einen faltbaren modularen Korb (10) aufweist, gemäß einem der vorangehenden Ansprüche, **dadurch gekennzeichnet, dass** das Batteriemodul (80) mittels eines herkömmlichen USB-, USB-C- oder eines beliebigen Geräts, das dazu angepasst ist, als Ladegerät zu dienen, geladen werden kann.

6. Bausatz zum Transport von beweglichen Gütern und Lebensmitteln, der reversibel im Kofferraum eines beliebigen Straßenfahrzeugs verrastbar ist, der einen faltbaren modularen Korb (10) aufweist, gemäß einem der vorangehenden Ansprüche, **dadurch gekennzeichnet, dass** der Bausatz mit einem programmierbaren elektronischen System versehen ist, das in das Batteriemodul (80) integriert ist und dazu angepasst ist, mit zumindest einer Fernbedienung und jeder anderen Einrichtung nach dem Stand der Technik verbunden zu werden.

7. Bausatz zum Transport von beweglichen Gütern und Lebensmitteln, der reversibel im Kofferraum eines beliebigen Straßenfahrzeugs verrastbar ist, der einen faltbaren modularen Korb (10) aufweist, gemäß Anspruch 6, wenn er von Anspruch 3 abhängt, **dadurch gekennzeichnet, dass** der Bausatz mit einer automatisierten Fernbedienung versehen ist, die dazu angepasst ist, das Schließen und Öffnen des mit Schienen versehenen Einsetzmechanismus mittels des programmierbaren elektronischen Systems zu ermöglichen.

8. Bausatz zum Transport von beweglichen Gütern und Lebensmitteln, der reversibel im Kofferraum eines beliebigen Straßenfahrzeugs verrastbar ist, der einen faltbaren modularen Korb (10) aufweist, gemäß einem der vorangehenden Ansprüche, **dadurch gekennzeichnet, dass** der Bausatz mit einem integrierten Scanner versehen ist, der dazu angepasst ist, mit Anwendungen, die auf mobilen Einrichtungen nach dem Stand der Technik installiert werden können, verbunden zu werden und das Einkaufen des Nutzers interaktiv zu verwalten.

9. Bausatz zum Transport von beweglichen Gütern und Lebensmitteln, der reversibel im Kofferraum eines beliebigen Straßenfahrzeugs verrastbar ist, der einen faltbaren modularen Korb (10) aufweist, gemäß einem der vorangehenden Ansprüche, **dadurch gekennzeichnet, dass** der Bausatz mit Mitteln zum Liefern von photovoltaischer Energie mittels Sonnenkollektoren, die über dem Thermoregler-Deckel installiert sind, versehen ist.

## Revendications

1. Kit pour le transport de marchandises et de denrées alimentaires mobiles qui peuvent être installées de manière réversible dans le coffre d'un véhicule routier quelconque, ledit kit comprenant un panier modulaire pliable (10) et une plaque de base (120), ledit panier modulaire pliable (10) étant agencé pour être fixé au-dessus du panneau de base (12)), ledit panneau de base (120) étant doté de rails (130) sur la surface supérieure et adapté pour être à son tour fixé de manière réversible dans un coffre d'un véhicule pour garantir la stabilité dudit panier (10) et de l'ensemble du kit ; lesdits rails (130) étant adaptés pour faire coulisser ledit panier modulaire pliable (10) de l'intérieur vers l'extérieur du coffre et vice versa ; ledit panier modulaire pliable (10) étant **caractérisé en ce qu'**il comprend :
- une trappe basculante droite (20) et une trappe basculante gauche (30), installées latéralement audit panier (10), adaptées pour être ouvertes et fermées par rotation sur l'axe d'une bande de charnière horizontale (40), située sur la partie supérieure desdites trappes (20, 30) ; une fois ouvertes et fixées en position verticale, lesdites trappes basculantes (20, 30) étant adaptées pour supporter l'ensemble du panier (10) ;
- au moins deux trappes rabattables (50) adaptées pour être relevées et abaissées au moyen d'une bande de charnière horizontale (45) ; lesdites charnières (45) étant adaptées pour diviser lesdites trappes rabattables (50) en deux, permettant leur fermeture et leur ouverture ;
- un panneau inférieur (60), agencé sous lesdites trappes basculantes (20, 30) et lesdites trappes rabattables (50), servant de fond dudit panier modulaire pliable (10) est adapté pour fixer de manière stable ledit panier modulaire pliable (10) sur ledit panneau de base (120) doté de rails (130) ; ledit panneau inférieur (60) étant doté de connecteurs intelligents (70) adaptés pour envoyer de l'énergie électrique à une pluralité de dispositifs adaptés pour être connectés auxdits connecteurs (70) ; ledit panneau inférieur étant doté d'aimants, agencés sur la surface inférieure dudit panneau inférieur (60), adaptés pour attirer des attaches magnétiques pour fixer d'autres modules ;
- une pluralité desdits connecteurs (70) adaptés pour recevoir de l'énergie électrique au moyen d'au moins un module de batterie (80) et la retransmettre à une pluralité de dispositifs adaptés pour être connectés auxdits connecteurs (70) ;
- au moins un module doté de roues refermables horizontalement (90) adapté pour être appliqué et fixé sous ledit panneau inférieur (60) au moyen d'attaches magnétiques adaptées pour être attirées par lesdits aimants ;
lesdits modules dotés de roues (90) étant adaptés pour permettre le transport de l'ensemble du panier modulaire pliable (10) ;
- ledit module de batterie rechargeable (80), installé latéralement à ladite trappe basculante droite (20), adapté pour alimenter l'ensemble du dispositif ;
- une pluralité de compartiments modulaires adaptés pour servir de récipients de base, de récipients réfrigérés isolants et de récipients pouvant être chauffés et adaptés pour être insérés dans ledit panier modulaire pliable (10) pour permettre la division des produits qui y sont contenus ;
- au moins deux poignées (110), positionnées sur lesdites trappes basculantes (20, 30) droites et gauches, adaptées pour relever ou abaisser l'ensemble du panier modulaire pliable (10) ;
- une poignée du panier, dotée d'un élément de préhension, adapté pour déplacer l'ensemble du dispositif au moyen du module doté de roues (90), qui peut être relié au moyen d'attaches sur la surface supérieure d'une desdites trappes basculantes (20, 30) ;
- un couvercle thermorégulateur amovible, agencé pour recouvrir ledit panier (10).

2. Kit pour le transport de marchandises et de denrées alimentaires mobiles qui peuvent être installées de manière réversible dans le coffre d'un véhicule routier quelconque comprenant un panier modulaire pliable (10), selon la revendication précédente 1, **caractérisé en ce que** les dimensions dudit panier modulaire pliable (10) peuvent aller d'un minimum de 54 cm x 37 cm x 28 cm pour une capacité de 45 litres à un maximum de 200 cm x 185 cm x 178 cm pour une capacité de 3560 litres ; les dimensions desdits compartiments modulaires peuvent être adaptées à la taille dudit panier modulaire pliable (10) ; en outre, elles peuvent être remodulées par l'utilisateur à chaque utilisation du kit.

3. Kit pour le transport de marchandises et de denrées alimentaires mobiles qui peuvent être installées de manière réversible dans le coffre d'un véhicule routier quelconque comprenant un panier modulaire pliable (10), selon l'une des revendications 1 ou 2, **caractérisé en ce que** ledit panier modulaire pliable (10) est adapté pour avoir toutes ses parties démontées et montées au moyen d'un mécanisme d'insertion doté de rails.

4. Kit pour le transport de marchandises et de denrées alimentaires mobiles qui peuvent être installées de manière réversible dans le coffre d'un véhicule routier quelconque comprenant un panier modulaire pliable (10), selon l'une des revendications précédentes, **caractérisé en ce que** ledit panier modulaire pliable (10) est doté de trous adaptés pour loger une sangle pour le transport dudit panier (10) en bandoulière.

5. Kit pour le transport de marchandises et de denrées alimentaires mobiles qui peuvent être installées de manière réversible dans le coffre d'un véhicule routier quelconque comprenant un panier modulaire pliable (10), selon l'une des revendications précédentes, **caractérisé en ce que** ledit module de batterie (80) peut être chargé au moyen d'un dispositif USB commun, d'un dispositif USBC ou de tout autre dispositif adapté pour servir de chargeur.

6. Kit pour le transport de marchandises et de denrées alimentaires mobiles qui peuvent être installées de manière réversible dans le coffre d'un véhicule routier quelconque comprenant un panier modulaire pliable (10), selon l'une des revendications précédentes, **caractérisé en ce que** ledit kit est doté d'un système électronique programmable, incorporé dans ledit module de batterie (80), adapté pour être connecté à au moins une télécommande et à tout autre dispositif de l'état de la technique.

7. Kit pour le transport de marchandises et de denrées alimentaires mobiles qui peuvent être installées de manière réversible dans le coffre d'un véhicule routier quelconque comprenant un panier modulaire pliable (10), selon la revendication 6 lorsqu'elle dépend de la revendication 3, **caractérisé en ce que** ledit kit est doté d'une télécommande automatisée adaptée pour permettre la fermeture et l'ouverture dudit mécanisme d'insertion doté de rails au moyen dudit système électronique programmable.

8. Kit pour le transport de marchandises et de denrées alimentaires mobiles qui peuvent être installées de manière réversible dans le coffre d'un véhicule routier quelconque comprenant un panier modulaire pliable (10), selon l'une des revendications précédentes, **caractérisé en ce que** ledit kit est doté d'un scanner incorporé adapté pour être connecté à des applications qui peuvent être installées sur des appareils mobiles de l'état de la technique et gérer de manière interactive les achats de l'utilisateur.

9. Kit de transport de marchandises et de denrées alimentaires mobiles qui peuvent être installées de manière réversible dans le coffre d'un véhicule routier quelconque comprenant un panier modulaire pliable (10), selon l'une des revendications précédentes, **caractérisé en ce que** ledit kit est doté de moyens d'alimentation en énergie photovoltaïque au moyen de panneaux solaires installés au-dessus dudit couvercle thermorégulateur.
